# EUROPÄISCHE PATENTANMELDUNG

(11) **EP 0 999 308 A1**
(43) Veröffentlichungstag der Anmeldung: **10.05.2000**
(21) Anmeldenummer: 99119848.2
(22) Anmeldetag: 07.10.1999
(51) Int. Cl.: E01C 5/06, E04B 2/06

(54) **Formstein**

(30) Priorität: 04.11.1998 DE 19850774; 22.07.1999 DE 19934495
(71) Anmelder: KOBRA FORMEN-UND ANLAGENBAU GmbH, D-08485 Lengenfeld (DE)
(72) Erfinder: Braungardt, Rudolf, 08485 Lengenfeld (DE); Schmucker, Erwin, 89601 Schelklingen (DE)
(74) Vertreter: Kornaker, Benno

(57) **Zusammenfassung**

Der als Beton-Verbundstein für Bodenbeläge und Mauern vorgesehene Formstein (2) besteht aus einem unteren, rechteckigen oder quadratischen Teil (4) und einem oberen Teil (1) mit einer cosinusförmig oder ähnlich verlaufenden Seitenkontur (5). Die beiden Teile des Formsteines sind durch abgeschrägte Stützflächen (6-9), die sich an mindestens zwei gegenüberliegenden Seitenwänden des Formsteines befinden, miteinander verbunden. Die Stützflächen (6-9) verlaufen ausgehend von einer oberen Seitenkontur des unteren Teils (4) des Formsteines schräg nach oben und nach außen bzw. nach innen bis zur unteren Seitenkontur des oberen Teils (1). Beim Verlegen der Formsteine liegen die schrägen Stützflächen (6-9) benachbarter Formsteine passend aufeinander und ergeben dadurch einen optimalen Formschluß zwischen den Formsteinen in vertikaler Richtung. Die Übertragung der Kräfte in horizontaler Richtung erfolgt durch die cosinusförmig oder ähnlich verlaufende Seitenkontur des oberen Teils der Formsteine.

## Beschreibung

Die Erfindung betrifft einen Formstein, insbesondere einen Beton-Verbundstein für Bodenbeläge oder Mauern, mit mindestens zwei sich gegenüberliegenden Seitenwänden, die Vorsprünge und Vertiefungen aufweisen, die zur horizontalen und vertikalen Stabilisierung des Verbundes in entsprechende Vertiefungen und Vorsprünge angrenzender Formsteine eingreifen.

Derartige Formsteine werden beim Verlegen so aneinander gesetzt, daß sie ähnlich einer Nut- und Feder-Verbindung ineinandergreifen und sowohl horizontale als auch vertikale Kräfte übertragen können, um dadurch einen in sich stabilen Verbund von Boden- oder Mauersteinen zu erhalten.

Durch die DE-OS 19 37 635 ist ein quadratischer Verbundstein der eingangs erwähnten Art bekannt geworden, dessen Seitenwände hervorstehende Nocken und zurückgesetzte Nuten aufweisen. Beim Verlegen werden die Verbundsteine so zusammengefügt, daß die Nocken benachbarter Verbundsteine in die Nuten der ersten Verbundsteine eingreifen. Dadurch soll sich eine Verkettung der Verbundsteine nicht nur in der Horizontalen, sondern auch in der Senkrechten ergeben.

Nachteilig bei dieser bekannten Steinausführung ist, daß die Verbindungsnocken über die Seitenkontur des Formsteines hinausragen. Dadurch wird die Fertigung erschwert, da zur Herstellung der Nocken lösbare Kerne in die Form eingelegt werden müssen. Außerdem werden die Nocken an den Formateinen auf Biegung beansprucht, so daß bei einer höheren Belastung des Verbundes die Gefahr besteht, daß die Nocken abbrechen. Die rechtwinklig abstehenden Nocken verhindern auch das vollständige Füllen der Fugen zwischen benachbarten Steinen mit Sand.

Der Erfindung liegt die Aufgabe zugrunde, einen Formstein der eingangs erwähnten Art zu schaffen, der eine einfache und kostensparende Herstellung ermöglicht und im Verbund eine hohe Stabilität und Belastbarkeit gewährleistet.

Gemäß der Erfindung wird die Aufgabe dadurch gelöst, daß die Vorsprünge und Vertiefungen als abgeschrägte Stützflächen ausgebildet sind, die einen unteren Teil des Formsteines mit einem oberen Teil verbinden und von einer oberen Seitenkontur des unteren Teils jeweils schräg nach außen und nach oben bzw. schräg nach innen und nach oben bis zur unteren Seitenkontur des oberen Teils des Formsteins verlaufen.

Nach einem weiteren Merkmal der Erfindung ist die Kontur des unteren Teils ein Rechteck oder ein Quadrat, während der obere Teil des Formsteins eine Seitenkontur aufweist, die gegenüber der Seitenkontur des unteren Teils jeweils um das gleiche Maß nach außen bzw. nach innen versetzt ist.

Vorteilhaferweise verlaufen die Seitenkonturen des oberen Teils cosinusförmig.

Ein optimaler Vertikal-Verbund zwischen den angrenzenden Formsteinen ergibt sich dadurch, daß zwei Stützflächen in Längsrichtung des Formsteines gesehen jeweils in den äußeren Seitenwandbereichen des Formsteines und zwei Stützflächen im mittleren Seitenwandbereich angeordnet sind. Dabei verlaufen die beiden äußeren Stützflächen ausgehend von der oberen Seitenkontur des unteren Teils schräg nach außen und nach oben bis zur unteren Seitenkontur des oberen Teils, während die beiden mittleren Stützflächen um das gleiche Maß schräg nach innen und nach oben bis zur unteren Seitenkontur des oberen Teils verlaufen.

Zweckmäßigerweise beträgt in Längsrichtung des Formsteines gesehen die Länge der beiden äußeren Stützflächen und die Länge der beiden mittleren Stützflächen jeweils ein Viertel der Länge des Formsteines.

Eine gute Verlegbarkeit des Formsteines und eine hohe Stabilität des Verbundes ergibt sich dadurch, daß die seitlich angrenzenden Formsteine in Längsrichtung zur Hälfte versetzt angeordnet sind, wobei ihre äußeren Stützflächen auf den mittleren Stützflächen des ersten Formsteines anfliegen.

Um eine vielseitige Verwendung des Formsteines zu ermöglichen, ist die rechteckförmige oder quadratische Unterseite des Formsteines durch Drehen um 180° auch als Oberseite verwendbar.

Bei einer anderen Ausführungsform der Erfindung besteht der obere Teil des Formsteines aus zwei Körpern mit quadratischen Horizontalflächen, die gegenüber dem unteren, rechteckigen Teil des Formsteines um 45° gedreht sind.

Die Verbindung zwischen dem oberen und unteren Teil des Formsteines erfolgt durch jeweils fünf Stützflächen, die an beiden Längsseiten des Formsteines angeordnet sind. Dabei verlaufen zwei in Längsrichtung des Formsteines gesehen äußere Stützflächen und eine mittlere Stützfläche ausgehend von einer oberen Seitenkontur des unteren Teils schräg nach oben und nach innen bis zur unteren Seitenkontur des oberen Teils, während zwei weitere Stützflächen, die jeweils zwischen der äußeren und der mittleren Stützfläche liegen, schräg nach oben und nach außen bis zur unteren Seitenkontur des oberen Teils des Formsteines verlaufen.

In weiterer Ausgestaltung der Erfindung sind die Stützflächen an allen Seitenwänden des Formsteines angeordnet.

Dadurch ergibt sich im verlegten Zustand eine besonders hohe Stabilität und Belastbarkeit des Steineverbundes in vertikaler Richtung.

Vorteilhafterweise sind an den beiden Längs-Seitenwänden des Formsteines je zwei Stützflächen und an den vorderen und hinteren Stirnwänden je drei Stützflächen angeordnet, die abwechselnd schräg nach oben und nach innen bzw. nach außen entsprechend der Kontur des oberen Teils verlauten.

Nach einem weiteren Merkmal der Erfindung besitzt der obere Teil des Formsteines die Form eines Fisches mit zwei sich gegenüberliegenden, eine sinusähnliche Seitenkontur aufweisenden Seitenwänden und mit zwei vorderen, einen konvexen Winkel einschließenden Stirnwänden und zwei hinteren, einen konkaven Winkel einschließenden Stirnwänden.

Zur Abführung von Oberflächenwasser in den Untergrund weisen die Längsseiten des unteren Teils des Formsteines je eine in Längsrichtung durchgehend verlaufende, nach unten offene Aussparung auf, die mit mindestens einem jeweils im Übergangsbereich der seitlichen Stützflächen des Formsteines angeordneten vertikalen, bis zur Oberseite des Formsteines geführten Kanal in Verbindung steht.

Ein optimaler Wasserablauf wird dadurch erreicht, daß die Aussparung im Querschnitt gesehen etwa im mittleren oder oberen Bereich der Seitenkontur des unteren Teils des Formsteines beginnt und an der Unterseite des unteren Teils mit einem Abstand von der unteren Seitenkante des unteren Teils des Formsteines endet, derart, daß im verlegten Zustand der Formsteine, bei dem die Aussparungen benachbarter Formsteine unmittelbar aneinanderliegen, ein horizontaler Wasserkanal mit einem Spalt an seiner Unterseite gebildet wird.

Nach einem weiteren Merkmal der Erfindung sind die Aussparungen im Querschnitt bogenförmig ausgebildet.

Vorteilhafterweise beträgt die Höhe der Aussparung etwa ein Drittel der Gesamthöhe des Formsteines.

Nach einem weiteren Merkmal der Erfindung sind die vertikalen Kanäle im Querschnitt etwa u-förmig ausgebildet.

Bei Bodenbelägen mit Gefälle kann die Verbindung der horizontalen Aussparungen untereinander dazu führen, daß das Wasser zu rasch abläuft, ohne zu versickern. In diesen Fällen kann es von Vorteil sein, wenn im Verlegemuster ein oder mehrere Formsteine ohne Wasserablaufkanäle angeordnet sind, die den Wasserdurchlauf in Gefällerichtung bremsen.

Die mit der Erfindung erzielten Vorteile bestehen insbesondere darin, daß die ineinandergreifenden Stützflächen in die Seitenwände der Formsteine integriert sind und keine überstehenden Nocken und zurückgesetzte Nuten aufweisen. Dadurch ergibt sich eine relativ einfache Fertigung mit Hilfe an sich bekannter Ziehbleche, da keine Hinterschneidungen vorhanden sind, die eine aufwendige Fertigung mittels lösbarer Kerne erforderlich machen würden. Darüberhinaus gewährleisten die abgeschrägten Stützflächen die Übertragung hoher Vertikalkräfte ohne Bruchgefahr der ineinander verzahnten Formsteine. Dies ergibt eine besonders hohe Belastbarkeit bei Bodenbelägen. Die schräg nach oben und nach außen verlaufenden Stützflächen liegen auf den schräg nach oben und nach innen verlaufenden Stützflächen der angrenzenden Formsteine auf und stützen sich gegenseitig ab. Da dies im Wechsel je nach Belastung der Formsteine erfolgt, ist ein Absenken einzelner Steine nicht möglich, da jeder belastete Formstein sich über seine äußeren Stützflächen an allen angrenzenden Formsteinen über deren inneren Stützflächen abstützt. Die Übertragung von Horizontalkräften wird durch die Kontur des oberen Teils des Formsteines erreicht. Auf diese Weise ergibt sich durch die Gestaltung des erfindungsgemäßen Formsteines eine optimale Kombination von Horizontal- und Vertikal-Verbund beim Verlegen der Formsteine. Ein weiterer Vorteil besteht darin, daß der erfindungsgemäße Formstein als Rechteck- oder Quadrat-Stein und auch als Konturstein verlegt werden kann, indem der Formstein um 180° gedreht wird und die Unterseite zur Oberseite wird. Bei Verwendung als Rechteck- oder Quadrat-Stein wird der Horizontalverbund durch den unteren Teil des Formsteines, dessen Seitenkonturen ineinandergreifen, hergestellt.

Die Erfindung ist in der folgenden Beschreibung und der Zeichnung, die mehrere Ausführungsbeispiele darstellt, näher erläutert. Es zeigen
- Fig. 1: eine Draufsicht auf den erfindungsgemäßen Formstein im Verlegemuster,
- Fig. 2: eine Vorderansicht des Formsteines nach Fig. 1,
- Fig. 3: einen Schnitt gemäß der Linie III - III in Fig. 1,
- Fig. 4: eine Seitenansicht des Formsteines nach Fig. 1,
- Fig. 5: eine Untenansicht des Formsteines nach Fig. 1,
- Fig. 6: eine perspektivische Ansicht des Formsteines nach Fig. 1,
- Fig. 7: ein perspektivische Ansicht einer anderen Ausführungsform des Formsteines,
- Fig. 8: eine Draufsicht auf den Formstein nach Fig. 7 im Verlegemuster,
- Fig. 9: einen Schnitt gemäß der Linie IX - IX in Fig. 8,
- Fig. 10: eine weitere Ausführungsform des Formsteines mit Verlegemuster,
- Fig. 11: eine perspektivische Darstellung des Formsteines nach Fig. 10,
- Fig. 12: eine Draufsicht auf eine Ausführungsform des Formsteines mit Wasserablaufkanälen,
- Fig. 13: eine Vorderansicht des Formsteines nach Fig. 12,
- Fig. 14: einen Schnitt gemäß der Linie XIV - XIV in Fig. 12 und
- Fig. 15: eine perspektivische Ansicht des Formsteines nach Fig. 12.

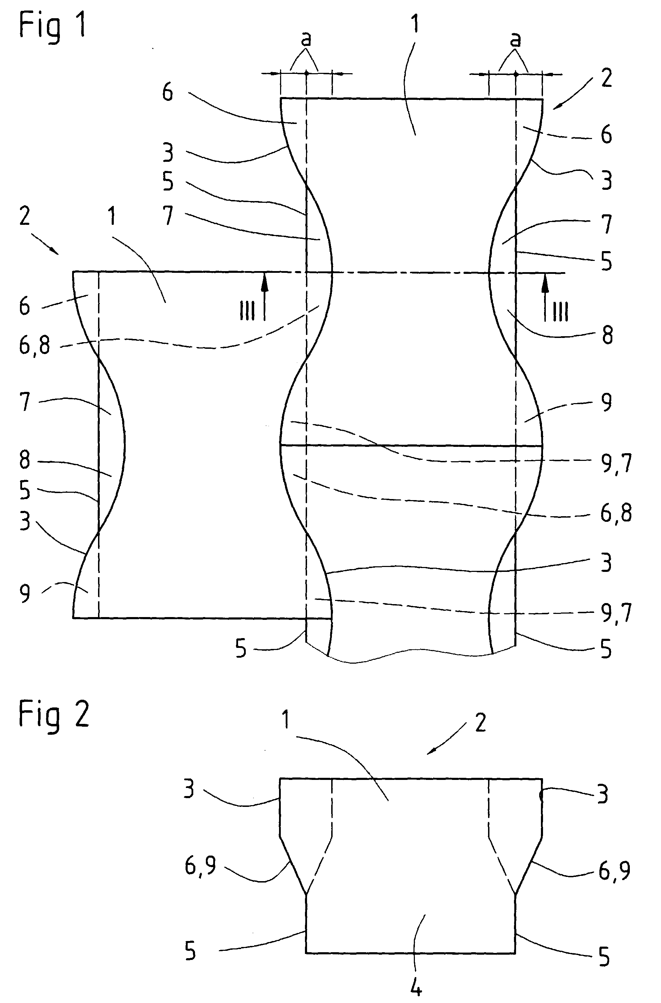

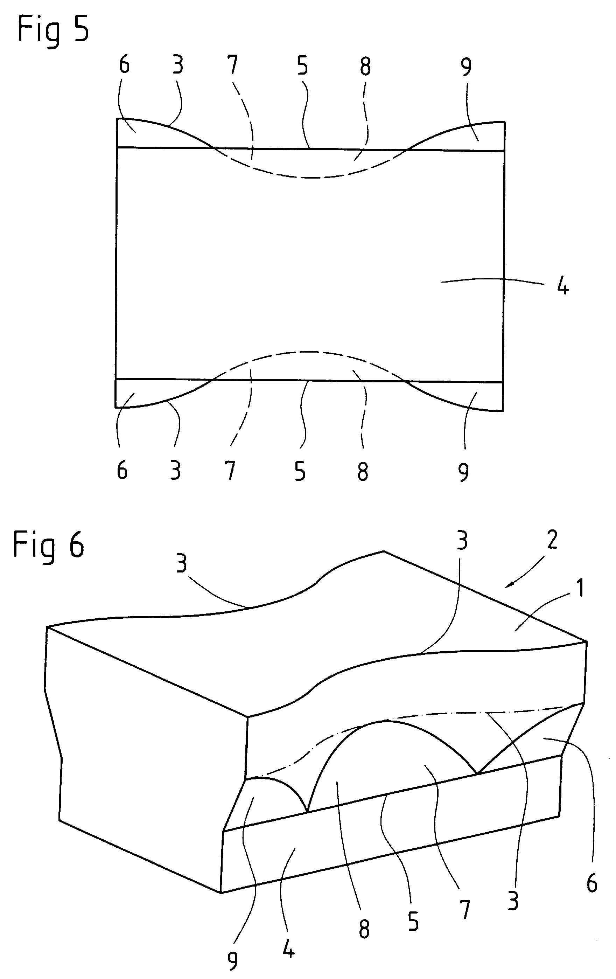

Ein oberer Teil 1 eines Formsteines 2 weist an seinen beiden gegenüberliegenden Seitenwänden in bekannter Weise eine cosinusförmige Seitenkontur 3 auf (Fig. 1 und 6). Ein unterer Teil 4 des Formsteines 2 ist als Rechteck mit einer geradlinigen Seitenkontur 5 ausgeführt. Die Verbindung des unteren Teils 4 mit dem oberen Teil 1 erfolgt durch mehrere abgeschrägte Stützflächen 6, 7, 8 und 9 an den Seitenwänden des Formsteines 2. Die in Längsrichtung des Formsteines 1 gesehen äußeren Stützflächen 6 und 9 verlaufen ausgehend von der oberen Seitenkontur 5 des unteren Teils 4 schräg nach außen und nach oben bis zur unteren, in Form einer Cosinuslinie verlaufenden Seitenkontur 3 des oberen Teils 1 des Formsteines 2. Die beiden mittleren Stützflächen 7 und 8, die im Ausführungsbeispiel eine gemeinsame Stützfläche bilden, verlaufen ausgehend von der oberen Seitenkontur 5 des unteren Teils 4 schräg nach innen und nach oben bis zur unteren Seitenkontur 3 des oberen Teils 1 des Formsteines 2. Das Maß a, um das die äußeren Stützflächen 6 und 9 nach außen verlaufen, ist gleich dem Maß a, um das die mittleren Stützflächen 7 und 8 nach innen verlaufen (Fig. 1). Mit Bezug auf die Senkrechte erstrecken sich alle Stützflächen 6, 7, 8, 9 unter dem gleichen Wimkel, vorzugsweise ca. 30° bis 45° nach oben und nach außen bzw. nach innen.

Beim Verlegen der Formsteine 2 werden an die Seite des ersten Formsteines die weiteren Formsteine in Längsrichtung gesehen jeweils zur Hälfte versetzt angelegt (Fig. 1). Dabei liegen die äußeren Stützflächen 6 und 9 der beiden angrenzenden Formsteine 2 auf den mittleren Stützflächen 7 und 8 des ersten Formsteines 2 auf, so daß sie in vertikaler Richtung nach unten abgestützt werden. In gleicher Weise liegen die äußeren Stützflächen 6 und 9 des ersten Formsteines 2 auf den mittleren Stützflächen 8 und 7 der beiden angrenzenden Formsteine 2 auf. Dadurch werden die Vertikalkräfte jedes Formsteines auf die benachbarten Formsteine mehrmals abgestützt, so daß sich eine hohe Stabilität des Verbundes in vertikaler Richtung ergibt. Die Verzahnung bzw. Kraftübertragung in horizontaler Richtung ergibt sich durch die ineinandergreifende, cosinusförmige Seitenkontur 3 des oberen Teils 1 des Formsteines 2.

Durch Drehen des Formsteines 2 um 180° kann der Formstein auch mit seiner Unterseite nach oben verlegt werden. Dabei bildet der untere Teil 4 mit seiner rechteckigen oder quadratischen Kontur die Oberfläche des Bodenbelages oder der Mauerwand (Fig. 5). Der Horizontal- und Vertikal-Verbund der Formsteine bleibt dabei in gleicher Weise erhalten wie im Falle der ersten Ausführung, bei der die cosinusförmige Kontur des oberen Teils 1 als Oberfläche des Bodenbelages verwendet wurde. Der gleiche Formstein 2 kann somit für zwei verschiedene Oberflächengestaltungen verwendet werden.

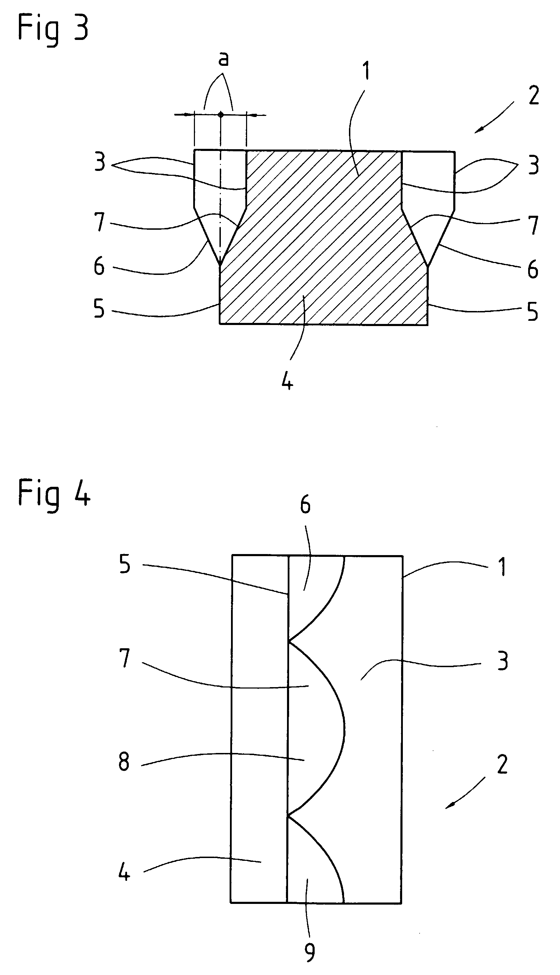

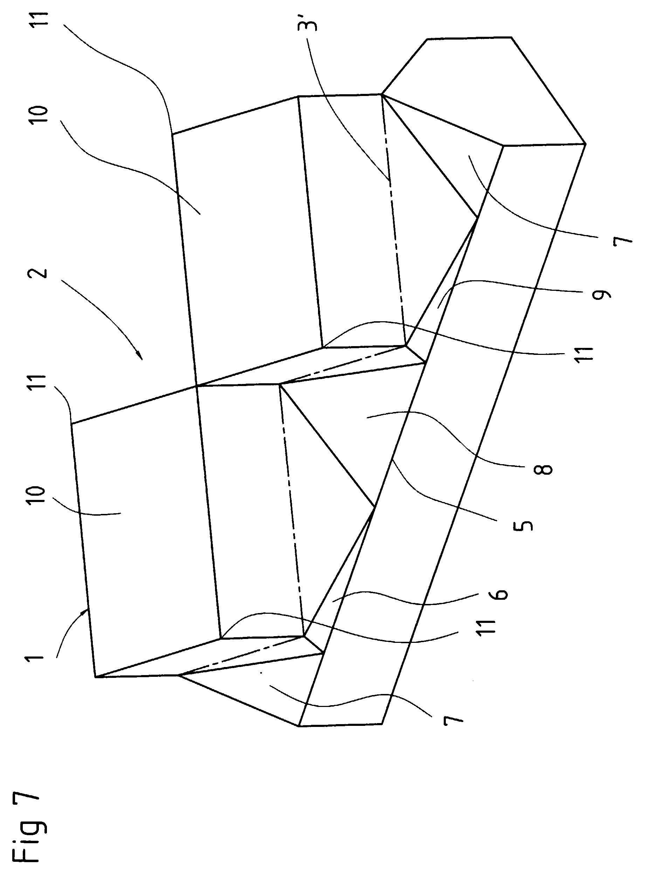

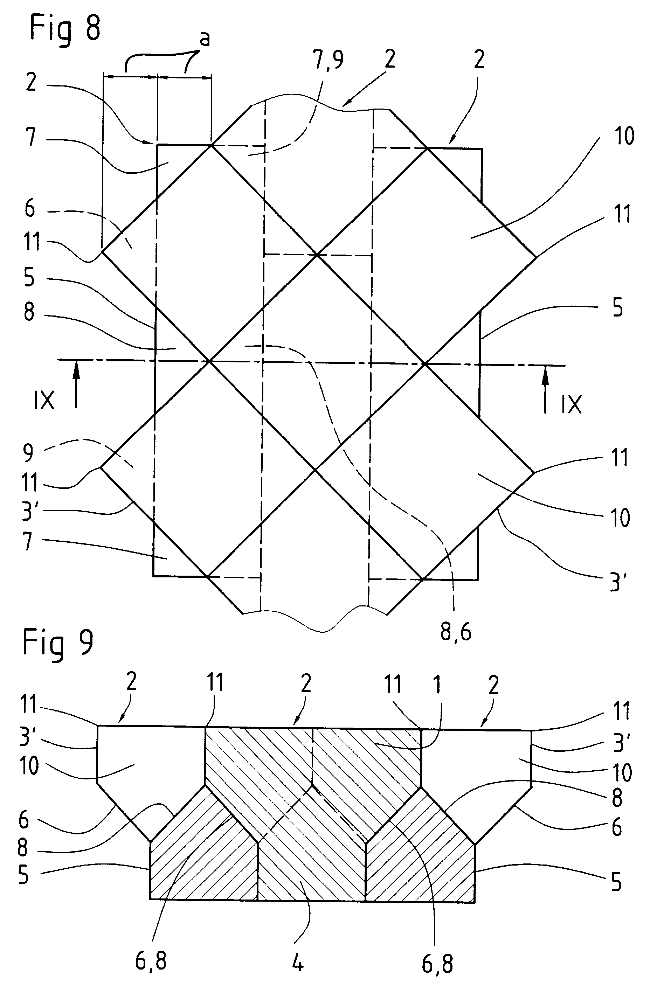

In den Fig. 7 bis 9 ist ein Ausführungsbeispiel der Erfindung gezeigt, bei dem der obere Teil 1 des Formsteines 2 aus zwei Körpern 10 mit quadratischen Horizontalflächen besteht. Gegenüber dem unteren, rechteckigen Teil 4 des Formsteines 2 sind die quadratischen Körper 10 des oberen Teils 1 um 45° verdreht angeordnet. Dadurch ragen die Ecken 11 der Körper 10, die an ihrer Unterseite abgeschrägte Stützflächen 6 und 9 tragen, über die Seitenkontur 5 des unteren Teils 4 hinaus. Die Stützflächen 6 und 9 verlaufen ausgehend von der oberen Seitenkontur 5 des unteren Teils 4 schräg nach oben und um das Maß a (Fig. 8) nach außen bis zur unteren, in Fig. 7 strichpunktiert dargestellten Seitenkontur 3' des oberen Teils 1 des Formsteines 2. An den in Längsrichtung gesehen äußeren Enden und in der Mitte des Formsteines 2 sind weitere Stützflächen 7 und 8 angeordnet, die ausgehend von der oberen Seitenkontur 5 des unteren Teils 4 schräg nach oben und um das Maß a nach innen bis zur unteren Seitenkontur 3' des oberen Teils 1 verlaufen. Dadurch ergibt sich über die zick-zack-förmig verlaufende Seitenkontur 3' des oberen Teils 1 in gleicher Weise wie bei den Ausführungsbeispielen gemäß Fig. 1 bis 6 ein Horizontal-Verbund und über die Stützflächen 6, 7, 8, 9 ein Vertikal-Verbund der angrenzenden Formsteine.

Für den Horizontal-Verbund der Formsteine eignet sich jede Form des oberen Teils 1 mit einer Seitenkontur, die gegenüber der oberen, geradlinigen Seitenkontur 5 des unteren Teils 4 jeweils abwechselnd um das gleiche Maß a nach innen bzw. nach außen versetzt in Längsrichtung des Formsteines verläuft.

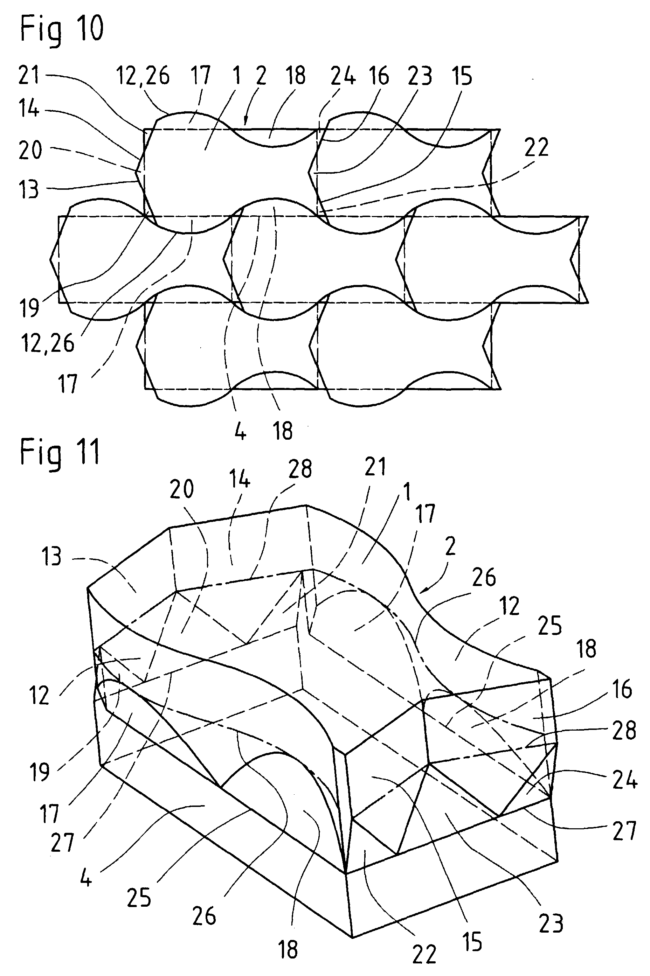

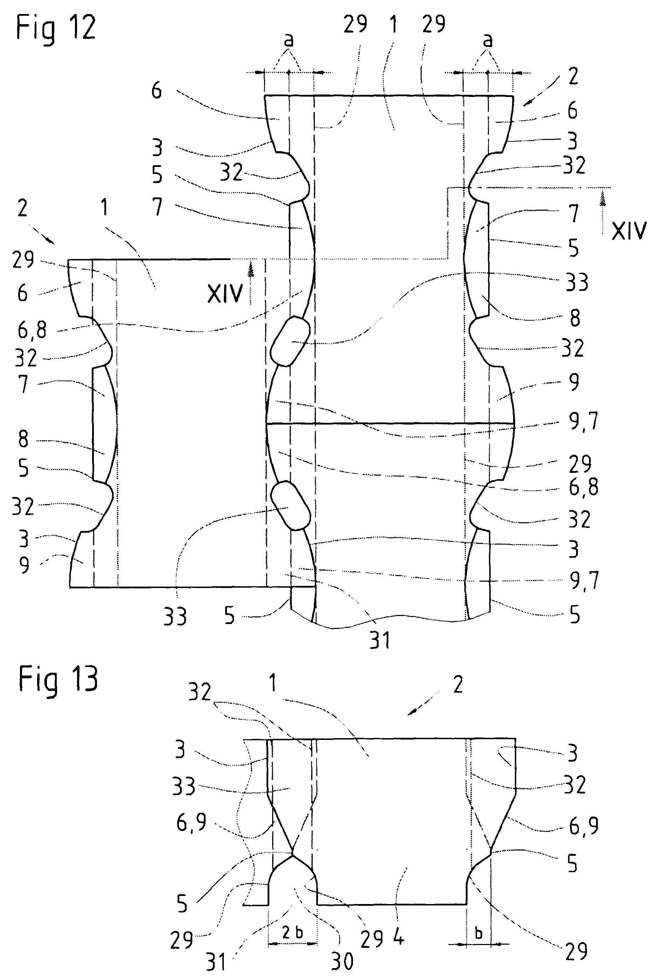

Ein weiteres Ausführungsbeispiel der Erfindung ist in den Fig. 10 und 11 dargestellt. Bei dieser Ausführung sind an allen Seitenwänden des Formsteines 2 Stützflächen vorgesehen. Der obere Teil 1 des Formsteines 2 weist die Form eines Fisches auf mit zwei sinusähnlichen, sich gegenüberliegenden Längs-Seitenwänden 12 und je zwei Stirnwänden 13, 14 und 15, 16. Die vorderen Stirnwände 13 und 14 schließen einen konvexen Winkel ein, während die hinteren Stirnwände 15 und 16 einen konkaven Winkel einschließen. Dadurch ergibt sich am vorderen Ende des Formsteines 2 eine Spitze, während das rückwärtige Ende des Formsteines 2 einen Einschnitt in Form einer Fisch-Schwanzflosse bildet. Der untere Teil 4 wird durch einen rechteckförmigen Quaderstein gebildet. Die Verbindung zwischen dem oberen Teil 1 und dem unteren Teil 4 wird durch je zwei Stützflächen 17, 18 an den Längs-Seitenwänden 12, drei Stützflächen 19, 20, 21 an den vorderen Stirnwänden 13, 14 und drei Stützflächen 22, 23, 24 an den hinteren Stirnwänden 15, 16 hergestellt. Die Stützflächen 17 und 18 erstrecken sich ausgehend von einer oberen, geradlinigen Seitenkontur 25 des unteren Teils 4 schräg nach oben und nach außen bzw. schräg nach oben und nach innen bis zu einer unteren, sinusähnlichen Seitenkontur 26 des oberen Teils 1 des Formsteines 2. Die Seitenkontur 26 ist in Fig. 11 als strichpunktierte, parallel zur oberen, sinusähnlichen Seitenkontur des oberen Teils 1 verlaufende Linie dargestellt.

Die äußeren Stützflächen 19 und 21 der vorderen Stirnwände 13, 14 erstrecken sich ausgehend von einer oberen, stirnseitigen Seitenkontur 27 des unteren Teils 4 schräg nach oben und nach innen bis zu einer unteren, v-förmigen Seitenkontur 28 des oberen Teils 1, während sich die mittlere Stützfläche 20 ausgehend von der Seitenkontur 27 schräg nach oben und nach außen bis zur Seitenkontur 28 erstreckt. Die äußeren Stützflächen 22, 24 der hinteren Stirnwände 15, 16 erstrecken sich ausgehend von der Seitenkontur 27 schräg nach oben und nach außen, während sich die mittlere Stützfläche 23 schräg nach oben und nach innen bis zur Seitenkontur 28 erstreckt. Mit Bezug auf die Senkrechte erstrecken sich die Stützflächen an jeweils zwei gegenüberliegenden Seiten des Formsteines 2 unter dem gleichen Winkel, vorzugsweis ca. 30 - 45°, nach oben und nach außen bzw. nach innen. Die untere Seitenkontur 28 des oberen Teils 1 ist in Fig. 11 als strichpunktierte, parallel zur oberen, v-förmigen Seitenkontur des oberen Teils 1 verlaufende Linie dargestellt. Die Höhe des oberen Teils 1, die Höhe der Stützflächen 17, 18, 19, 20, 21, 22, 23, 24 und die Höhe des unteren Teils 4 beträgt jeweils etwa ein Drittel der Gesamthöhe des Formsteines 2.

Im verlegten Zustand gemäß Fig. 10 liegen die seitlichen Stützflächen 17, 18 auf den Stützflächen 18, 17 der angrenzenden Formsteine 2. In gleicher Weise stützen sich die stirnseitigen, vorderen Stützflächen 19, 20, 21 auf den Stützflächen 22, 23, 24 des angrenzenden Formsteines 2 je nach Belastung ab. Die stirnseitigen, hinteren Stützflächen 22, 23, 24 liegen an den vorderen Stützflächen 19, 20, 21 des angrenzenden Formsteines 2. Dadurch ergibt sich an allen seitenwänden der Formsteine 2 ein hoch belastbarer, vertikaler Kräfteverbund, wobei sich jeder belastete Stein über die Stützfläche an den angrenzenden Formsteinen abstützt. Der horizontale Verbund ergibt sich durch das Ineinandergreifen der seitlichen, sinusähnlichen Seitenkonturen 26 und der stirnseitigen, v-förmigen Seitenkonturen 27 des oberen Teils 1 des Formsteines 2.

Alle seitlichen Stützflächen 6, 7, 8, 9, 17, 18 des Formsteines 2 erstrecken sich von der Seitenkontur 5, 25 des unteren Teils 4 des Formsteines 2 nach oben bis zum, in Querrichtung gesehen, jeweils äußersten bzw. innersten Punkt der Seitenkontur 3, 3', 26 des oberen Teils 1. Dies gilt auch für die stirnseitigen Stützflächen 19 bis 24 des Formsteines 2 (Fig. 10 und 11), die sich, in Längsrichtung gesehen, bis zum jeweils äußersten bzw. innersten Punkt der stirnseitigen Seitenkontur 28 des oberen Teils 1 des Formsteines 2 erstrecken.

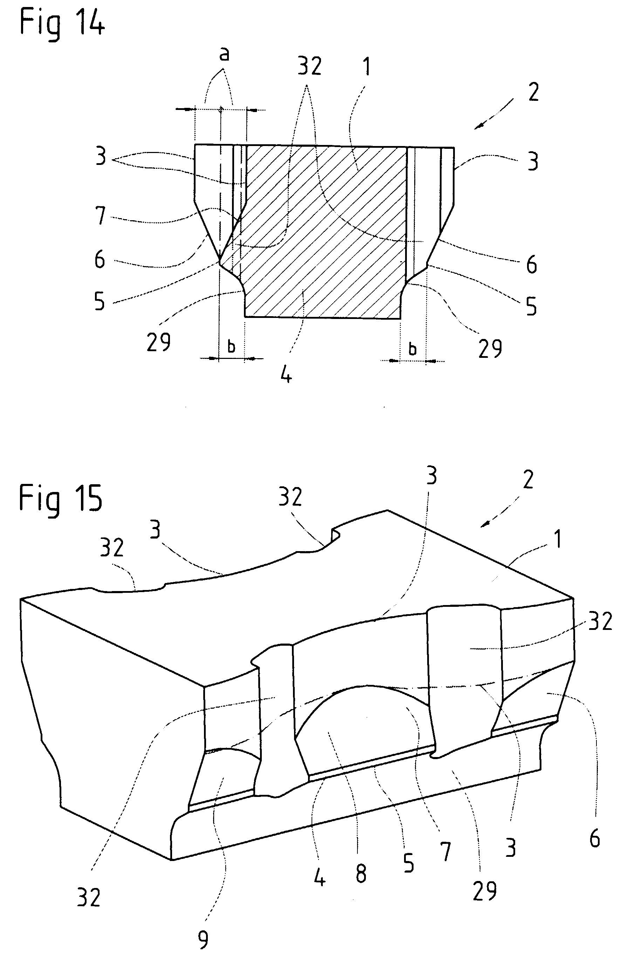

Die Fig. 12 bis 15 zeigen eine Ausführungsform des Formsteines mit seitlichen Kanälen zur Abführung von Regenwasser in den Untergrund. Hierzu weist jeder Formstein 2 jeweils im unteren Bereich der geradlinigen Seitenkonturen 5 des unteren Teils 4 des Formsteines 2 eine in Längsrichtung durchgehend verlaufende Aussparung 29 auf. Die im Querschnitt etwa bogenförmige Aussparung 29 beginnt im mittleren oder oberen Bereich der Seitenkontur 5 und endet an der Unterseite des unteren Teils 4 mit einem Abstand b von der unteren Seitenkante des Teils 4. Der Querschnitt der Aussparungen 29 kann auch beispielsweise rechteckig sein oder eine andere geometrische Form aufweisen. Beim Verlegen der Formsteine 2 liegen die Aussparungen 29 benachbarter Formsteine 2 unmittelbar nebeneinander, so daß sich ein im Querschnitt etwa bogenförmiger Wasserkanal 30 und ein Spalt 31 mit der Breite 2b an seiner Unterseite ergibt. Die horizontalen Aussparungen 29 sind mit jeweils zwei vertikalen, in den beiden Längs-Seitenwänden des Formsteines 2 angeordneten Kanälen 32 verbunden, die bis zur Oberseite des Formsteines 2 nach oben geführt sind. Die im Querschnitt etwa u-förmigen Kanäle 32 befinden sich jeweils im Bereich des Überganges der Stützfläche 6 in die Stützfläche 7 und der Stützfläche 8 in die Stützfläche 9. Beim Verlegen der Formsteine 2 liegen die Kanäle 32 benachbarter Formsteine 2 unmittelbar nebeneinander, so daß sich pro Formstein 2 vier vertikale Wasserkanäle 33 mit einem etwa rechteckigen Querschnitt ergeben, die mit den horizontalen Wasserkanälen 30 in Verbindung stehen. Der Querschnitt der Kanäle 32 kann auch beispielsweise halbkreisförmig sein oder eine andere geometrische Form aufweisen.

Das sich an der Oberseite der Formsteine 2 bzw. des Bodenbelages ansammelnde Regenwasser kann durch die vertikalen Wasserkanäle 33 nach unten abfließen und in die horizontalen Wasserkanäle 30 eintreten, die sowohl mit den vertikalen Wasserkanälen 33 als auch mit den horizontalen Wasserkanälen 30 der sich an den Stirnseiten anschließenden, benachbarten Formsteine 2 verbunden sind. Das sich in den horizontalen Wasserkanälen 30 ansammelnde Wasser kann durch den Spalt 31 im jeweiligen Wasserkanal 30 nach unten in das Erdreich abfließen. Die horizontalen Wasserkanäle 30 und der Spalt 31 sorgen für einen raschen Wasserablauf, da sie relativ groß dimensioniert werden können. Die Gefahr des Kippens oder Abbrechens des Formsteines 2 bei hohen vertikalen Belastungen ist ausgeschlossen, da durch das Ineinandergreifen der seitlichen Stützflächen 6, 8, und 7, 9 der benachbarten Formsteine 2 keine Biegekräfte auf die überstehenden Teile des Formsteines 2 ausgeübt werden.

Für den Fall, daß der Bodenbelag nicht waagrecht, sondern mit einem Gefälle verläuft, besteht die Gefahr, daß das abfließende Wasser die miteinander verbundenen horizontalen Aussparungen zu rasch durchläuft und nicht in ausreichendem Maße versickern kann. In diesm Fall ist es von Vorteil, wenn in gewissen Abständen im Verlegemuster mehrere Formsteine gemäß Fig. 1 angeordnet sind, die keine Wasserablaufkanäle aufweisen und dadurch den Wasserdurchlauf in Gefällerichtung abbremsen.

Die erfindungsgemäßen Aussparungen an den unteren Seitenkanten des Betonformsteines sorgen mit einem relativ großen Querschnitt für den ungehinderten Ablauf des Oberflächenwassers in den Untergrund. Sie können einfach und kostengünstig mittels Aussparungskörpern, die im Ziehblech integriert sind, hergestellt werden. Die Gefahr des Kippens oder Abbrechens des Formsteines wird dadurch verhindert, daß sich die benachbarten Formsteine durch das Ineinandergreifen der seitlichen Stützflächen gegenseitig in vertikaler Richtung abstützen. Da sich die Stützflächen im mittleren und oberen Bereich der Seitenwände des Formsteines befinden, ist die Anordnung von Bodenauflagen im Bereich der Aussparungen nicht erforderlich und die Aussparungen können relativ groß dimensioniert werden. Beim Aneinanderlegen der Formsteine ergeben sich somit relativ große und nach unten offene Wasserkanäle, die einen ungehinderten, raschen Wasserablauf gewährleisten.

## Patentansprüche

1. Formstein, insbesondere Beton-Verbundstein für Bodenbeläge oder Mauern, mit mindestens zwei sich gegenüberliegenden Seitenwänden, die Vorsprünge und Vertiefungen aufweisen, die zur horizontalen und vertikalen Stabilisierung des Verbundes in entsprechende Vertiefungen und Vorsprünge angrenzender Formsteine eingreifen, dadurch gekennzeichnet, daß die Vorsprünge und Vertiefungen als abgeschrägte Stützflächen (6,7,8,9) ausgebildet sind, die einen unteren Teil (4) des Formsteines (2) mit einem oberen Teil (1) verbinden und von einer oberen Seitenkontur (5) des unteren Teils (4) schräg nach außen und nach oben bzw. schräg nach innen und nach oben bis zu einer unteren Seitenkontur (3) des oberen Teils (1) verlaufen.

2. Formstein nach Anspruch 1, dadurch gekennzeichnet, daß die Kontur des unteren Teils (4) ein Rechteck oder ein Quadrat ist und der obere Teil (1) des Formsteines (2) eine Seitenkontur (3) aufweist die gegenüber der Seitenkontur (5) des unteren Teils (4) jeweils um das gleiche Maß (a) nach außen bzw. nach innen versetzt ist.

3. Formstein nach Anspruch 2, dadurch gekennzeichnet, daß die Seitenkonturen (3) des oberen Teils (1) cosinusförmig verlauten.

4. Formstein nach einem der Ansprüche 1 bis 3, dadurch gekennzeichnet, daß zwei Stützflächen (6) und (9) in Längsrichtung des Formsteines (2) gesehen jeweils in den äußeren Seitenwandbereichen des Formsteines (2) und zwei Stützflächen (7) und (8) im mittleren Seitenwandbereich angeordnet sind.

5. Formstein nach Anspruch 4, dadurch gekennzeichnet, daß die beiden äußeren Stützflächen (6) und (9) ausgehend von der oberen Seitenkontur (5) des unteren Teils (4) des Formsteines (2) schräg nach außen und nach oben bis zur unteren Seitenkontur (3) des oberen Teils (1) verlaufen, während die beiden mittleren Stützflächen (7) und (8) um das gleiche Maß (a) schräg nach innen und nach oben bis zur unteren Seitenkontur (3) des oberen Teils (1) verlaufen.

6. Formstein nach einem der Ansprüche 1 bis 5, dadurch gekennzeichnet, daß in Längsrichtung des Formsteines (2) gesehen die Länge der beiden äußeren Stützflächen (6) und (9) und die Länge der beiden mittleren Stützflächen (7) und (8) jeweils ein Viertel der Länge des Formsteines (2) betragen.

7. Formstein nach einem der Ansprüche 1 bis 6, dadurch gekennzeichnet, daß die seitlich angrenzenden Formsteine in Längsrichtung zur Hälfte versetzt angeordnet sind, wobei ihre äußeren Stützflächen (6) bzw. (9) auf den mittleren Stützflächen (7) bzw. (8) des ersten Formsteines aufliegen.

8. Formstein nach einem der Ansprüche 1 bis 7, dadurch gekennzeichnet, daß die rechteckige oder quadratische Unterseite des Formsteines (2) durch Drehen des Formsteines um 180° auch als Oberseite verwendbar ist.

9. Formstein nach einem der Ansprüche 1 bis 8, dadurch gekennzeichnet, daß der obere Teil (1) des Formsteines (2) aus zwei Körpern (10) mit quadratischen Horizontalflächen besteht, die in Draufsicht gesehen gegenüber dem unteren, rechteckigen Teil (4) des Formsteines (2) um 45° gedreht sind.

10. Formstein nach Anspruch 9, dadurch gekennzeichnet, daß die Verbindung des unteren Teils (4) mit dem oberen Teil (1) des Formsteines (2) durch je fünf Stützflächen (6, 7, 8, 9) erfolgt, die an beiden Längsseiten des Formsteines (2) angeordnet sind.

11. Formstein nach Anspruch 9 oder 10, dadurch gekennzeichnet, daß zwei, in Längsrichtung des Formsteines (2) gesehen, äußere Stützflächen (7) und eine mittlere Stützfläche (8) ausgehend von einer oberen Seitenkontur (5) des unteren Teils (1) schräg nach oben und nach innen bis zur unteren Seitenkontur (3') des oberen Teils (1) verlaufen, während zwei weitere Stützflächen (6, 9), die jeweils zwischen der äußeren Stützfläche (7) und der mittleren Stützfläche (8) angeordnet sind, ausgehend von der oberen Seitenkontur (5) des unteren Teils (4) schräg nach oben und nach außen bis zur unteren Seitenkontur (3') des oberen Teils (1) des Formsteines (2) verlaufen.

12. Formstein nach einem der Ansprüche 1 bis 11, dadurch gekennzeichnet, daß an allen Seitenwänden des Formsteines (2) Stützflächen angeordnet sind.

13. Formstein nach Anspruch 12, dadurch gekennzeichnet, daß an den beiden Längs-Seitenwänden (12) des Formsteines (2) je zwei Stützflächen (17, 18), an den vorderen Stirnwänden (13, 14) drei Stützflächen (19, 20, 21) und an den rückwärtigen Stirnwänden (15, 16) drei Stützflächen (22, 23, 24) angeordnet sind, die abwechselnd schräg nach oben und nach innen bzw. nach außen entsprechend der Kontur des oberen Teils (1) verlaufen.

14. Formstein nach Anspruch 12 oder 13, dadurch gekennzeichnet, daß der obere Teil (1) des Formsteines (2) die Form eines Fisches mit zwei sich gegenüberliegenden, eine sinusähnliche Seitenkontur (26) aufweisenden Seitenwänden (12) und mit zwei vorderen, einen konvexen Winkel einschließenden Stirnwänden (13, 14) und zwei hinteren, einen konkaven Winkel einschliessenden Stirnwänden (15, 16) besitzt.

15. Formstein nach einem der Ansprüche 1 bis 14, dadurch gekennzeichnet, daß die Längsseiten des unteren Teils (4) des Formsteines (2) je eine in Längsrichtung durchgehend verlaufende, nach unten offene Aussparung (29) aufweisen, die mit mindestens einem jeweils im Übergangsbereich der Stützflächen (6, 7) bzw. (8, 9) angeordneten vertikalen, bis zur Oberseite des Formsteines (2) geführten Kanal (32) in Verbindung steht.

16. Formstein nach Anspruch 15, dadurch gekennzeichnet, daß die Aussparung (29) im Querschnitt gesehen etwa im mittleren oder oberen Bereich der Seitenkontur (5) des unteren Teils (4) des Formsteines (2) beginnt und an der Unterseite des Teils (4) mit einem Abstand (b) von der unteren Seitenkante des Teils (4) endet, derart, daß im verlegten Zustand der Formsteine (2), in dem die Aussparungen (29) benachbarter Formsteine (2) unmittelbar aneinander liegen, ein horizontaler Wasserkanal (30) mit einem Spalt (31) an seiner Unterseite, dessen Breite 2b beträgt, gebildet wird.

17. Formstein nach Anspruch 15 oder 16, dadurch gekennzeichnet, daß die Aussparungen (29) im Querschnitt bogenförmig ausgebildet sind.

18. Formstein nach einem der Ansprüche 15 bis 17, dadurch gekennzeichnet, daß die Höhe der Aussparung (29) etwa ein Drittel der Gesamthöhe des Formsteines (2) beträgt.

19. Formstein nach einem der Ansprüche 15 bis 18, dadurch gekennzeichnet, daß die vertikalen Kanäle (32) im Querschnitt etwa U-förmig ausgebildet sind.

20. Formstein nach einem der Ansprüche 1 bis 19, dadurch gekennzeichnet, daß bei Bodenbelägen mit Gefälle im Verlegemuster ein oder mehrere Formsteine (2) ohne Aussparungen (29) angeordnet sind, die den Wasserdurchlauf in Gefällerichtung bremsen.
